# EUROPEAN PATENT SPECIFICATION

(11) **EP 2 186 620 B1**
(45) Date of publication and mention of the grant of the patent: **17.06.2015**
(21) Application number: 09175057.0
(22) Date of filing: 04.11.2009
(51) Int. Cl.: B29C 51/26, B21D 22/22, B29C 51/08

(54) **Panel forming apparatus**
Vorrichtung für Panelbildung
Appareils formant un panel

(30) Priority: 13.11.2008 IT MI20082011
(43) Date of publication of application: 19.05.2010
(73) Proprietor: Persico S.p.A., 24027 Nembro (BG) (IT)
(72) Inventor: Ambrosini, Paolo, 24021 Albino (BG) (IT)
(74) Representative: Ferroni, Filippo

(56) References cited:
- EP-A- 1 629 956
- DE-A1-102004 063 657
- DE-B3-102004 045 398

## Description

The present invention relates to an apparatus for forming panels, in particular for internal trims of motor vehicles.

In panel production, forming dies are commonly used which close onto a suitable sheet (generally consisting of several layers) for the purpose of forming it through a combination of heat and pressure.

EP1645399 has proposed a panel forming die wherein the impression of each half die consists of an inner portion and a frame portion, so that the sheet is retained before being formed. Said patent, however, does not deal with cutting and removing the scrap that protrudes outside the frame.

DE-A-102004063657 discloses a forming apparatus according to preamble of claim 1, wherein an additional cutting tool is provided for cutting the peripheral scrap portion of the sheet, thereby rendering complex the structural and functional aspects of the apparatus.

In the prior art, after the forming process the die is opened again and the peripheral scrap must be cut. Scrap cutting can be a delicate and costly task, which usually requires the presence of a separate cutting station.

Dies have been proposed which are provided with sharp peripheral edges for shearing the scrap after closing the die. As a consequence of cutting edge deterioration, which may occur after repeated forming operations, the scrap is often detached imperfectly and requires subsequent manual intervention. Such an imperfect detachment is even more likely to occur when using multilayer sheets (like those typically employed for manufacturing vehicle panels) having layers with different characteristics, e.g. fabric and plastic layers, soft layers, trim layers, etc.

It is the general object of the present invention to overcome the above-mentioned drawbacks by providing a forming apparatus which ensures that the scrap is cut and separated perfectly.

In view of said object, an apparatus is provided for forming panels by starting from a sheet of material, comprising a press with two half dies mounted on the press planes for forming a sheet interposed therebetween and having a scrap portion projecting out of a half-die closing line, characterized by also comprising a frame consisting of two sliding ledges fitted with first driving means for closing onto each other with the peripheral sheet portion protruding from the half dies interposed therebetween, and second driving means for further sliding the frame in order to move the scrap portion clamped by the ledges away from the half-die closing line, so as to cause or assist the separation of the scrap from the product formed in the half dies.

In order to clearly explain the innovative principles of the present apparatus and the advantages thereof over the prior art, the following will describe, by way of example, a possible embodiment implementing such principles. In the drawings:
- Figs. 1 to 4 are schematic sectional views of an operating sequence of the disclosed apparatus;
- Fig. 5 is an enlarged view of a region of the apparatus of Fig. 1;
- Fig. 6 is a view of a variant embodiment.

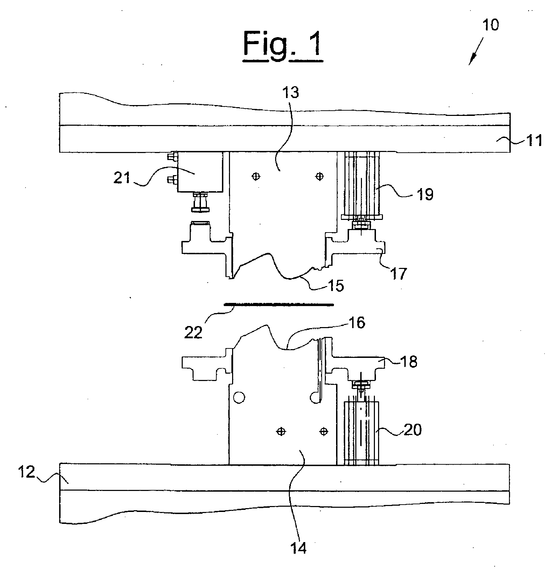

With reference to the annexed drawings, Fig. 1 schematically shows a panel forming apparatus designated as a whole by numeral 10. Apparatus 10 comprises a press with press planes 11 and 12. For simplicity, the press mechanism (which is advantageously vertical) is not shown in detail, since it can easily be imagined by a man skilled in the art.

Supported by press planes 11, 12, respective half dies 13, 14 define facing forming surfaces 15, 16. The half dies may comprise all those known heating and/or cooling means required for a traditional forming process, also depending on the material to be formed (thermosetting or thermoplastic material).

A tensioning and scrap-removing ledge frame is arranged around the half dies, which consists of two ledges 17 and 18 adapted to slide with little play, at least in an edge region, over the side walls of the half dies in the proximity of the edge where the facing forming surfaces close onto each other. As will become apparent, the play (e.g. about 2-3 hundredths at the edge) may advantageously be reduced in order to attain a "scissors" effect (or "shears" effect) between the edge of a half die and the edge of an opposite frame ledge, with said edges sliding towards each other until they climb over each other. The actual play required for creating the "scissors" effect may also depend on the material to be cut.

The ledges slide relative to the half dies and in the closing direction of the latter through respective first driving means, preferably provided as opposite pneumatic actuators 19, 20 (only two of which are shown for simplicity). The first driving means are advantageously, but not necessarily, attached to planes 11 and 12. Second driving means, preferably provided as hydraulic actuators 21 (only one of which is shown for simplicity), may act upon ledge 17 in order to push it further against the action of the pneumatic actuators, so as to obtain an additional sliding movement in the half-die closing direction. Advantageously, these second driving means may be attached to the press plane as well.

In the preferred embodiment, one plane carries one half die and one ledge, with the respective pneumatic actuators and hydraulic actuators acting upon such ledge, whereas the other plane carries the other half die and the other ledge with the respective pneumatic actuators. The actuators are distributed around the ledges to ensure even support and thrust. Slide guides may also be envisaged as well.

As shown in Fig. 1, the double-acting pneumatic actuators have rods constrained to the respective ledges in order to allow the ledges to move in both directions. Instead, the hydraulic actuators only exert a thrusting action from the back of the corresponding ledge. The stroke required for each actuator is apparent from the following description of the system operation.

Initially, a sheet 22 to be formed is placed between the open half dies. The sheet may be a single-layer sheet or a suitable multi-layer sandwich made of known materials (e.g. thermoplastic or thermosetting materials), with fabric, trimming, soundproofing layers, etc., as can be easily imagined by a man skilled in the art, for manufacturing internal trims and similar parts for cars and industrial vehicles by thermoforming.

The sheet may be inserted either automatically by a known automatic conveyor system (not shown) or manually by an operator.

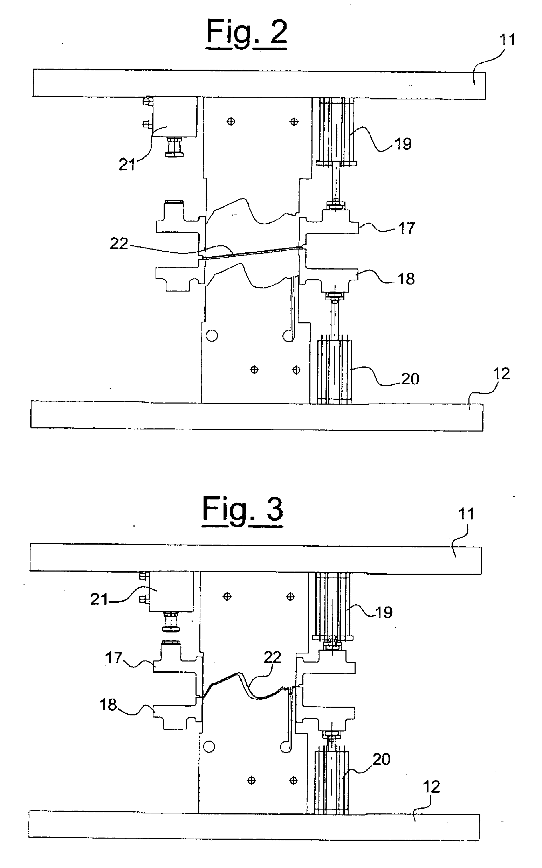

As shown in Fig. 2, the pneumatic actuators are first turned on in order to clamp an edge region of the sheet between ledges 17 and 18. Advantageously, the force applied for clamping the sheet between the ledges can be adjusted so as to allow the sheet to slide appropriately during the forming process. The ledges are preferably positioned in a manner such that the sheet is located in the half-die closing area.

Subsequently the press is activated and the two half dies move towards each other under the desired force in order to form the part. During this stage, the frame formed by the two ledges performs it sheet tensioning function while allowing the material to slide.

As can be seen in Fig. 3, the ledge edges used for clamping the sheet substantially match the half-die closing line. The ledges close onto the sheet in the scrap portion or area that protrudes from the half-die closing line.

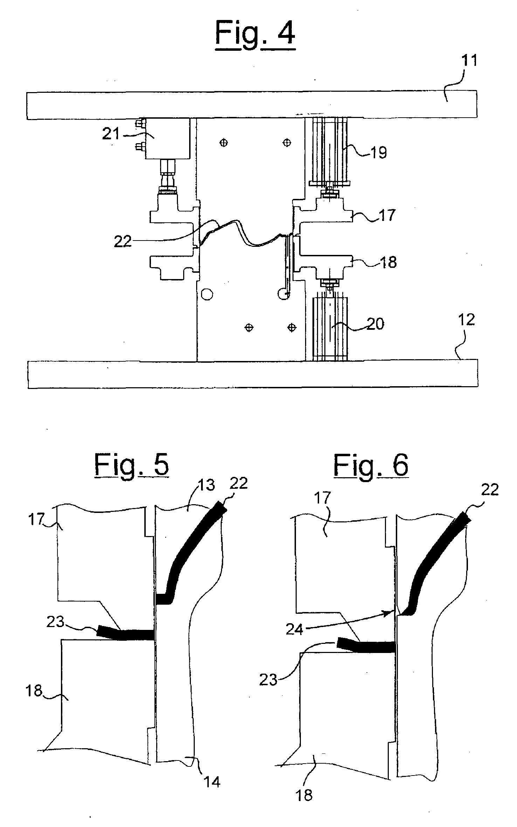

When the die is fully closed, the pneumatic actuators of the upper ledge may have reached the end of their stroke, while those of the lower ledge can still slide further inwards for a certain length. This provides an advantageous elastic reaction against the subsequent thrust exerted by the opposite hydraulic actuators, as clearly shown in Fig. 4.

As Fig. 5 better illustrates, the thrust of the hydraulic actuator causes the clamping frame consisting of the two ledges to slide, so that its sheet clamping edge becomes offset relative to the die closing line. This causes and/or assists the complete separation of outer scrap 23 from the part formed within the die. Once the forming cycle has ended, the die can be opened again and the formed part can be removed. The return of the ledges to their initial open position allows the scrap to be removed as well.

In order to make the automatic or manual part removal easier, the part may also be held against the upper half-die by fitting the latter with known mechanical elements.

As shown in Fig. 6, the die may also advantageously comprise substantially known means 24 for cutting or carving the sheet peripherally along the die closing line. The cutting technology used may be abutting blade, serrated blade on rubber or punch die block, etc., as can be easily imagined by those skilled in the art.

If the die is equipped with cutting means, when the die is closed the forming step is carried out along with the cutting step, which cuts both the outer profile and any internal holes (if technically allowed by the use of suitable known internal elements). Inner scraps can be unloaded through the lower half die and evacuated into suitable boxes through a conveyor belt.

During the closing step, the tensioning and scrap-removing ledge still performs its tensioning function, allowing the material to slide. The subsequent downward movement of the ledges assists and ensures the complete separation of the scrap in every point, even should the cutting means of the die execute an imperfect cut. If needed, the play between the ledges and the half dies may be greater than necessary for a full "scissors effect", and the action of the ledges may be limited to assisting the separation along the cut or almost cut lines.

The clamping ledge frame with two separate movements, one for clamping the material and the other (upwards or downwards) for fully separating the formed part from its scrap, allows for a fast and low-cost production of peripherally cut parts with no scraps, even when using multi-layer materials. Prior-art pressing systems required two processing steps, with one forming station and another separate station for part cutting and trimming.

Of course, the above description of an embodiment of the present apparatus incorporating the innovative principles thereof is provided herein only as an example of such innovative principles. For example, the peripheral scrap cutting or tearing effect may be obtained by moving the ledges in opposite directions (upwards instead of downwards as illustrated).

Of course, the press may also be a horizontal one, the terms "upper" and "lower" being used herein for ease of description only.

## Claims

1. Apparatus (10) for thermoforming panels by starting from a sheet of material, comprising a press with two half dies (13, 14) mounted on the press planes (11, 12) for thermoforming a sheet (22) interposed therebetween and having a scrap portion (23) projecting out of a half-die (13,14) closing line, also comprising a frame consisting of two sliding ledges (17, 18) fitted with first driving means (19, 20) for closing onto each other, with the peripheral sheet portion protruding from the half dies (13,14) interposed therebetween, **characterized in that** it comprises second driving means (21) for further sliding the frame in order to move the scrap portion (23) clamped by the ledges (17, 18) away from the half-die (13,14) closing line, so as to cause or assist the separation of the scrap from the product formed in the half dies (13,14), wherein the first driving means (19,20) are provided as respective pneumatic actuators (19, 20) arranged between each ledge (17 or 18) and a corresponding press plane (11 or 12).

2. Apparatus according to claim 1, **characterized in that** the second driving means (21) are provided as respective hydraulic actuators (21) arranged between one ledge (17) and the corresponding press plane (11).

3. Apparatus according to claims 1 or 2, **characterized in that** the second driving means (21) push the frame for further sliding it against an elastic action of the first driving means (19,20).

4. Apparatus according to any of the preceding claims, **characterized in that** the play between a side edge of the half dies (13,14) in the proximity of the closing line and a corresponding side edge of the ledges is so reduced as to produce a scissors-like scrap cutting action during said further sliding of the frame.

5. Apparatus according to any of the preceding claims, **characterized in that** the half dies (13,14) are peripherally equipped with sheet cutting or carving means (14) along their closing line.

## Patentansprüche

1. Vorrichtung (10) zum Thermoformen von Paneelen, ausgehend von einer Materialplatte, umfassend eine Presse mit zwei Halb-Pressformen (13, 14), die an den Pressflächen (11, 12) angebracht sind, zum Thermoformen einer zwischen ihnen angeordneten Platte (22), und aufweisend einen Restabschnitt (23), der aus einer Schließlinie der Halb-Pressformen (13, 14) herausragt, des Weiteren umfassend einen Rahmen, der aus zwei Verschiebeabsätzen (17, 18) besteht, die mit ersten Antriebsmitteln (19, 20) zum Schließen aufeinander versehen sind, wobei zwischen ihnen der Randbereich der Platte, der aus den Halb-Pressformen (13, 14) hervorsteht, angeordnet ist, **dadurch gekennzeichnet, dass** sie zweite Antriebsmittel (21) umfasst, um zusätzlich den Rahmen zu verschieben, um den Restabschnitt (23), der durch die Absätze (17, 18) festgeklemmt wird, von der Schließlinie der Halb-Pressform (13, 14) wegzubewegen, um so die Trennung des Restes von dem in den Halb-Pressformen (13, 14) geformten Produkt zu bewirken oder diese zu unterstützen, wobei die ersten Antriebsmittel (19, 20) als entsprechende pneumatische Aktuatoren (19, 20) bereitgestellt sind, die zwischen jedem Absatz (17 oder 18) und einer entsprechenden Pressfläche (11 oder 12) angeordnet sind.

2. Vorrichtung nach Anspruch 1, **dadurch gekennzeichnet, dass** die zweiten Antriebsmittel (21) als entsprechende hydraulische Aktuatoren (21) bereitgestellt sind, die zwischen einem Absatz (17) und der korrespondierenden Pressfläche (11) angeordnet sind.

3. Vorrichtung nach Anspruch 1 oder 2, **dadurch gekennzeichnet, dass** die zweiten Antriebsmittel (21) den Rahmen anschieben, um diesen zusätzlich entgegen einer elastischen Aktion der ersten Antriebsmittel (19, 20) zu verschieben.

4. Vorrichtung nach einem der vorangegangenen Ansprüche, **dadurch gekennzeichnet, dass** das Spiel zwischen einer Seitenkante der Halb-Pressformen (13, 14) in der Nähe der Schließlinie und einer korrespondierenden Seitenkante der Absätze so reduziert ist, dass es eine scherenartige Restabschneideaktion während des zusätzlichen Verschiebens des Rahmens erzeugt.

5. Vorrichtung nach einem der vorangegangenen Ansprüche, **dadurch gekennzeichnet, dass** die Halb-Pressformen (13, 14) im Randbereich mit Plattenschneide- oder Schnitzmitteln (14) entlang ihrer Schließlinie ausgestattet sind.

## Revendications

1. Appareil (10) de thermoformage de panneaux à partir d'une feuille de matériau, comprenant une presse munie de deux demi-coquilles (13, 14) montées sur les plans de presse (11, 12) afin de thermoformer une feuille (22) intercalée entre ceux-ci et présentant une portion de rebut (23) qui fait saillie hors de la ligne de fermeture d'une demi-coquille (13, 14), comprenant également un cadre constitué de deux rebords coulissants (17, 18) munis de premiers moyens d'entraînement (19, 20) leur permettant de se refermer l'une sur l'autre, la portion périphérique de la feuille faisant saillie hors des demi-coquilles (13, 14) intercalées entre ceux-ci, **caractérisé en ce qu'**il comprend un second moyen d'entraînement (21) permettant de faire glisser le cadre plus loin afin de déplacer la portion de rebut (23) pincée par les rebords (17, 18) en l'éloignant de la ligne de fermeture des demi-coquilles (13, 14), de manière à provoquer ou à aider la séparation du rebut du produit formé dans les demi-coquilles (13, 14), dans lequel les premiers moyens d'entraînement (19, 20) sont fournis pour servir d'actionneurs pneumatiques (19, 20) respectifs, agencés entre chaque rebord (17 ou 18) et un plan de presse (11 ou 12) correspondant.

2. Appareil selon la revendication 1, **caractérisé en ce que** les seconds moyens d'entraînement (21) sont fournis pour servir d'actionneurs hydrauliques (21) respectifs agencés entre un rebord (17) et le plan de presse (11) correspondant.

3. Appareil selon les revendications 1 ou 2, **caractérisé en ce que** les seconds moyens d'entraînement (21) poussent le cadre pour le faire glisser plus loin, en s'opposant à une action élastique des premiers moyens d'entraînement (19, 20).

4. Appareil selon l'une quelconque des revendications précédentes, **caractérisé en ce que** le jeu entre un bord latéral des demi-coquilles (13, 14) à proximité de la ligne de fermeture et un bord latéral correspondant des rebords est réduit de manière à produire une action de découpe du rebut comme le feraient des ciseaux au cours dudit glissement prolongé du cadre.

5. Appareil selon l'une quelconque des revendications précédentes, **caractérisé en ce que** les demi-coquilles (13, 14) sont munies, sur leur périphérie, de moyens de découpe ou de taille (14) de la feuille le long de leur ligne de fermeture.
